# EUROPEAN PATENT APPLICATION

(11) **EP 2 050 721 A1**
(43) Date of publication of application: **22.04.2009**
(21) Application number: 07791612.0
(22) Date of filing: 31.07.2007
(51) Int. Cl.: C02F 1/461, C02F 5/00

(54) **WATER SOFTENING METHOD AND WATER SOFTENER**

(30) Priority: 08.08.2006 JP 2006215206
(71) Applicant: Koganei Corporation, Chiyoda-ku, Tokyo 101-0032 (JP)
(72) Inventor: NAKANO, Takayuki, Tokyo 101-0032 (JP)
(74) Representative: Bates, Philip Ian
(86) International application number: PCT/JP2007/064927
(87) International publication number: WO 2008/018316

(57) **Abstract**

A method of softening water to be treated which requires the lowest maintenance and management cost without the need for a cumbersome cleaning operation for removing scale from an electrolytic vessel by taking out electrode plates from the electrolytic vessel, and an apparatus therefor are provided. In the method of softening water to be treated by applying a DC voltage across opposing electrode plates while flowing water to be treated therebetween, so that metal ions in the water to be treated are electrolytically precipitated on the surfaces of electrode plates on the negative pole side, thereby softening the water to be treated, the electrode plates comprise titanium, and increased voltage is applied to an anodically oxidized film formed on the surfaces of electrode plates on the positive pole side, to dielectrically break down the anodically oxidized film to thereby flow electric current in a desired amount.

## Description

### TECHNICAL FIELD

This invention relates to a method of softening water by electrolyzing water to be treated and to an apparatus therefor. More specifically, the invention relates to a method of softening water comprising automatically peeling off scale deposited on the surfaces of electrode plates at the time of softening water by electrolysis and flowing electric current in an amount necessary for softening water constantly and to an apparatus therefor.

### BACKGROUND ART

A method of softening water and an apparatus for softening water have been known, according to which, for example, water to be treated is fed into an electrolytic vessel in which electrode plates are facing each other, a DC voltage is applied across the electrode plates, and cations and anions in water to be treated are removed by being oxidized or reduced on the surfaces of the electrode plates to thereby soften the water to be treated.

When the above method of softening water or the apparatus for softening water is operated for extended periods of time; however scale (derived from alkali metals, etc.) in water to be treated precipitates and deposits on the surfaces of electrode plates on the negative pole side, and the flow of electric current gradually decreases making it difficult to soften the water to be treated.

Therefore, if scale was deposited more than a predetermined level on the surfaces of the electrode plates on the negative pole side preventing the flow of electric current, it was common to take the electrode plates out of the electrolytic vessel, physically remove the scale from the surfaces of the electrode plates, and to mount the electrode plates in the electrolytic vessel again.

However, laborious work was required for taking the electrode plates out of the electrolytic vessel, for physically removing the scale from the electrode plates and for mounting the electrode plates in the electrolytic vessel again, and a considerable amount of cost was required for the maintenance and management of the apparatus for softening water.

In order to solve the above problem, there has further been proposed an apparatus for softening water by reversing the polarities applied to the electrode plates at predetermined intervals, in order to automatically peel off the scale adhered on the surfaces of electrode plates on the negative pole side.

Despite the polarities of the electrode plates are reversed at predetermined intervals, however, the scale firmly adhered on the surfaces of electrode plates cannot be completely peeled off. The scale that has firmly adhered gradually accumulates on the surfaces of electrode plates and makes it more difficult to flow electric current.
Patent document 1: Japanese Unexamined Patent Publication JP-A-8-299990
Patent document 2: Japanese Examined Patent Publication JP-B-63-38440

### DISCLOSURE OF THE INVENTION

It is an object of the present invention to provide a method of softening water which suppresses scale from depositing on the surfaces of electrode plates despite the processing for softening water to be treated is continued for extended periods of time and does not impair the capability for softening water to be treated, and an apparatus therefor.

According to the method of softening water to be treated of the invention, water to be treated and softened is flown between the opposing electrode plates, and a DC voltage is applied across the electrode plates so that metal ions in the water to be treated are electrolytically precipitated on the surfaces of electrode plates on the negative pole side to thereby soften the water to be treated.

Titanium plates are used as the opposing electrode plates on both the positive pole side and the negative pole side. Upon flowing electric current by applying a DC voltage across the electrode plates, further, an anodically oxidized film forms on the surfaces of electrode plates on the positive pole side and the flow of electric current across the electrode plates gradually decreases. According to the present invention, however, an increased voltage is applied to the anodically oxidized film to dielectrically break down the anodically oxidized film, and therefore, to peel the anodically oxidized film off the surfaces of electrodes to thereby flow the electric current in a desired amount at all times.

Further, the polarity of the voltage applied across the electrode plates may be switched at predetermined intervals. Further, the applied voltage may be increased by flowing a constant electric current despite the formation of the anodically oxidized film. In this case, it is desired that the electric current flowing across the electrode plates is 0.1 to 20 A per a unit area (1 m²) of the electrode plates on the positive pole side. If the current is smaller than 0.1 A/m², water to be treated cannot be softened to a sufficient degree. If the current exceeds 20 A/m², on the other hand, the electrode plates are quickly corroded and can no longer be used.

Further, when the electric conductivity of water to be treated is higher than a predetermined value A, the electric current flowing across the electrode plates may be increased, and when the electric conductivity of water to be treated is lower than a predetermined value B, the electric current flowing across the electrode plates may be decreased, the predetermined value A and the predetermined value B maintaining a relationship A ≥ B. It is desired that the predetermined value A of electric conductivity of the water to be treated is 100 to 3000 µS/cm and the predetermined value B thereof is 100 to 3000 µS/cm.

Further, when the oxidation-reduction potential of water to be treated is higher than a predetermined value C, the electric current flowing across the electrode plates may be increased, and when the oxidation-reduction potential of water to be treated is lower than a predetermined value D, the electric current flowing across the electrode plates may be decreased, the predetermined value C and the predetermined value D maintaining a relationship C ≥ D. It is desired that the predetermined value C of oxidation-reduction potential of the water to be treated is +100 to -100 mV and the predetermined value D thereof is +100 to -100 mV.

Further, an apparatus for softening water according to the invention comprises an electrolytic vessel for receiving and draining water to be treated, one or more first electrode plates installed in the electrolytic vessel, one or more second electrode plates installed in the electrolytic vessel maintaining a predetermined gap relative to the first electrode plates, and a DC source for applying a DC voltage across the first electrode plates and the second electrode plates.

The first electrode plates and the second electrode plates both comprise titanium plates, and the DC source is capable of supplying a voltage for peeling and removing, by dielectric breakdown, the anodically oxidized film formed on the surfaces of the first electrode plates or on the second electrode plates.

The apparatus for softening water to be treated may, further, include a polarity switching device for switching, at predetermined intervals, the polarity of voltage applied by the DC source to the first electrode plates and to the second electrode plates.

The apparatus for softening water to be treated may use a constant-current power supply as the DC source. It is desired that the constant-current power supply is capable of flowing a constant current of 0.1 to 20 A per a unit area (1 m²) of the electrode plates functioning as the positive electrodes, between the first electrode plates and the second electrode plates.

The apparatus for softening water to be treated may further include a conductivity meter for measuring the electric conductivity of water to be treated, and a current controller which, when the electric conductivity measured by the conductivity meter is higher than a predetermined value A, increases the output voltage of the DC source to increase the electric current flowing across the electrode plates, and when the electric conductivity measured by the conductivity meter is lower than a predetermined value B, decreases the output voltage of the DC source to decrease the electric current flowing across the electrode plates, the predetermined value A and the predetermined value B maintaining a relationship A ≥ B.

It is desired that the predetermined value A of electric conductivity of the water to be treated is 100 to 3000 µS/cm and the predetermined value B thereof is 100 to 3000 µS/cm.

The apparatus for softening water to be treated may further include an oxidation-reduction potential meter for measuring the oxidation-reduction potential of water to be treated, and a current controller which, when the oxidation-reduction potential measured by the oxidation-reduction potential meter is higher than a predetermined value C, increases the output voltage of the DC source to increase electric current flowing across the electrode plates, and when the oxidation-reduction potential measured by the oxidation-reduction potential meter is lower than a predetermined value D, decreases the output voltage of the DC source to decrease the electric current flowing across the electrode plates, the predetermined value C and the predetermined value D maintaining a relationship C ≥ D.

It is desired that the predetermined value C of oxidation-reduction potential of the water to be treated is +100 to -100 mV and the predetermined value D thereof is +100 to -100 mV. It is, further desired that the predetermined value C of oxidation-reduction potential of the water to be treated is -50 to 0 mV and the predetermined value D thereof is -50 to 0 mV.

According to the invention, an anodically oxidized film formed on the surfaces of electrode plates on the positive pole side is compulsively and dielectrically broken down, and therefore, electric current flows in an amount necessary for removing the scale in water to be treated despite the formation of the anodically oxidized film. Accordingly, the scale in the water to be treated is effectively removed, and therefore, the water to be treated is softened, offering such an effect that the electric conductivity of the water to be treated is maintained within a desired range.

Further, when the invention is provided with the polarity switching device for switching at predetermined intervals the polarity of the voltage applied to the electrode plates, the scale adhered and grown on the surfaces of electrode plates can be removed free of maintenance without the removal operation by the workers, offering an advantage of decreased maintenance and management cost.

According to the invention, further, when the polarity of the voltage applied to the electrode plates is switched at predetermined intervals, the electrode plates on one side only are not worn out, but the opposing electrode plates on both sides are similarly worn out, enabling expensive titanium plates to be effectively utilized.

According to the invention, further, the electric current flowing across the electrode plates is increased in case the electric conductivity of water to be treated becomes higher than the predetermined value, so that the anodically oxidized film formed on the surfaces of electrode plates on the positive pole side is compulsively and dielectrically broken down. Therefore, the electric current flows in an amount necessary for removing the scale in the water to be treated despite the formation of the anodically oxidized film, and the scale in the water to be treated is effectively removed. Further, when the electric current flowing across the electrode plates is decreased in case the electric conductivity of water to be treated becomes smaller than the predetermined value, then the consumption of the electrode plates can be reduced.

According to the invention, further, the electric current flowing across the electrode plates is increased in case the oxidation-reduction potential of water to be treated becomes higher than the predetermined value, so that the anodically oxidized film formed on the surfaces of electrode plates on the positive pole side is compulsively and dielectrically broken down. Therefore, the electric current flows in an amount necessary for removing the scale in the water to be treated despite the formation of the anodically oxidized film, and the scale in the water to be treated is effectively removed. Further, when the electric current flowing across the electrode plates is decreased in case the oxidation-reduction potential of water to be treated becomes smaller than the predetermined value, then the consumption of the electrode plates can be reduced.

### BRIEF DESCRIPTION OF THE DRAWINGS

Fig. 1 is a view illustrating an apparatus for softening water according to an embodiment of the invention.
Fig. 2 is a view illustrating an electrode plate unit used in the apparatus for softening water of Fig. 1.
Fig. 3 is a view illustrating a control mechanism in the apparatus for softening water according to one embodiment of the invention.
Fig. 4 is a graph illustrating a relationship among the voltage applied across the electrode plates, the electric conductivity and the oxidation-reduction potential.
Fig. 5 is a graph illustrating shifts in the electric conductivity and in the oxidation-reduction potential depending upon an increase or decrease of voltage.
Fig. 6 is a graph illustrating a relationship between the magnitude of current density (A/m²) and the rate of decrease in the electric conductivity (µS/cm).
Fig. 7 is a graph illustrating shifts in the electric conductivity and in the oxidation-reduction potential depending upon an increase or decrease of current.

### BEST MODE FOR CARRYING OUT THE INVENTION

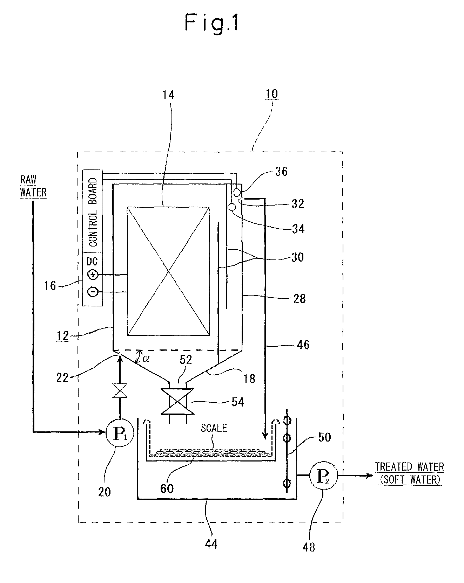

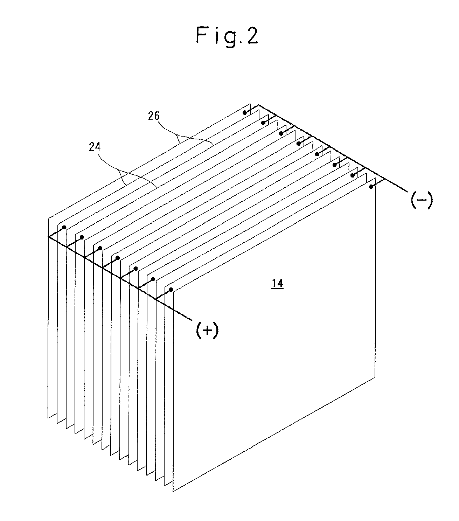

Fig. 1 is a view illustrating an apparatus for softening water according to an embodiment of the invention and Fig. 2 is a view illustrating an electrode plate unit used in the apparatus for softening water of Fig. 1.

In these drawings, reference numeral 10 denotes an apparatus for softening water which includes an electrolytic vessel 12, an electrode plate unit 14 placed in the electrolytic vessel 12, and a DC source 16 for feeding a direct current to the electrode plate unit 14.

The electrolytic vessel 12 comprises a box-like container. A water-feed port 22 is provided in a bottom portion 18 of the electrolytic vessel 12 at a position close to the side portion of the electrolytic vessel 12 to receive raw water (water to be treated). The sizes (capacities) of the electrolytic vessel 12 and of a water-feed pump 20 are determined depending upon the capacity of raw water to be treated.

The electrode plate unit 14 comprises a plurality of pieces of first electrode plates 24 and a plurality of pieces of second electrode plates 26, the first electrode plates 24 and the second electrode plates 26 being alternately arranged in parallel with each other maintaining a predetermined gap. The size (area) of the electrode plate unit 14 is determined depending upon the capacity of raw water to be treated.

The first electrode plates 24 of the electrode plate unit 14 are connected to a positive output terminal of the DC source 16, and the second electrode plates 26 are connected to a negative output terminal of the DC source 16. The DC source 16 is a regulated DC power supply capable of flowing electric current of about 0.1 to 20 A per a unit area [m²] of the first electrode plates 24.

Two pieces of parallel overflow partitions 30 are provided between the side portion 28 of the electrolytic vessel 12 and the electrode unit 14 at a place on the opposite side of the water-feed port 22, these partitions being slightly deviated up and down, and oriented nearly vertically maintaining a predetermined gap. A flow-out port 32 is provided in the side portion 28 of the electrolytic vessel 12 at an upper position on the side where the overflow partitions 30 are provided to flow out water which has been treated to be softened.

A conductivity meter 34 for measuring the electric conductivity of water to be treated is provided between the side portion 28 of the electrolytic vessel 12 and the overflow partitions 30 near the flow-out port 32. The conductivity meter 34 is connected to an alarm device 38 and turns an alarm lamp 40 on or sounds an alarm buzzer 42 in case the electric conductivity of water to be treated becomes greater than a predetermined value.

A float switch 36 is installed at an upper part of the electrolytic vessel 12. The float switch 36 turns the alarm lamp 40 on and sounds the alarm buzzer 42 when the scale builds up on a filtering portion 60 of a receiving tank 44 causing a resistance against the flow of the treated water and blocking the drain from the electrolytic vessel 12.

The receiving tank 44 is provided under the electrolytic vessel 12 to temporarily store the water that has been treated to be softened through the electrolytic vessel 12. The flow-out port 32 is communicated with the receiving tank 44 via a flow-out line 46.

A drain pump 48 is provided near the receiving tank 44 to drain the treated water (soft water) in the receiving tank 44, and a float switch 50 is provided in the receiving tank 44 to operate the drain pump 48 when the level of treated water that is received becomes higher than a predetermined level and to drain the treated water from the receiving tank 44.

A drain port 52 is provided in the bottom portion 18 of the electrolytic vessel 12 near the center thereof to drain the scale that is peeled off. The bottom portion 18 of the electrolytic vessel 12 is inclined to become lower toward the drain port 52, the angle of inclination lying in a range of 25 degrees to 35 degrees.

A drain device 54 is provided facing downward on the back side of the bottom portion 18 of the electrolytic vessel 12 at a portion where the drain port 52 is provided. The drain device 54 has a drain valve 56 which is an opening/closing device. The drain valve 56 is controlled for its timing and time for opening/closing by a timer 58 for drainage.

The flow-out side of the drain device 54 is opened without being connected to another pipe. The filtering portion 60 is provided just under the drain device 54 and over the receiving tank 44 to separate the scale drained together from the treated water.

The drain device 54 has a draining capability, i.e., a maximum flow rate of drained water of 30 liters/minute or larger when the water is filled in the electrolytic vessel 12 up to a predetermined height and the drain valve 56 is fully opened.

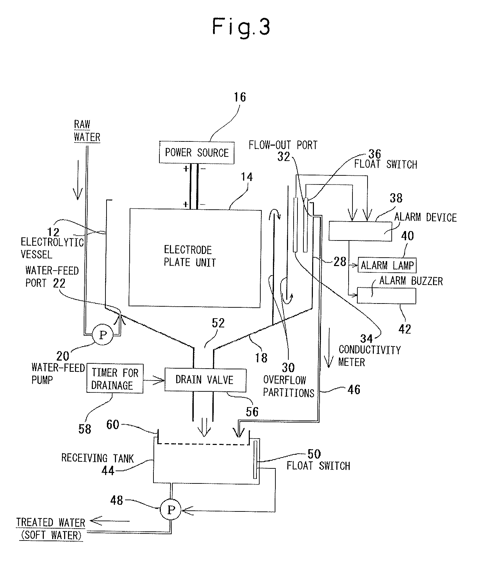

Next, operation of the apparatus for softening water will be described with reference to Fig. 3. Fig. 3 is a view illustrating a control mechanism in the apparatus for softening water according to one embodiment of the invention.

First, when the water-feed pump 20 is operated, raw water (water to be treated) is fed into the electrolytic vessel 12 through the water-feed port 22 of the electrolytic vessel 12.

The supplied raw water submerges the electrode unit 14, flows between the overflow partition plates 30, flows to the exterior of the electrolytic vessel 12 through the flow-out port 32, and enters into the receiving tank 44.

The float switch 50 of the receiving tank 44 is adjusted such that the switch is turned on at a predetermined height. When the amount of treated water (soft water) in the receiving tank 44 reaches a preset height, the float switch 50 is turned on, the drain pump 48 operates, and the treated water that has entered into the receiving tank 44 is drained by the drain pump 48.

When the DC source 16 is turned on in a state where the electrolytic vessel 12 is filled with water to be treated, a positive voltage is applied to the first electrode plates 24, a negative voltage is applied to the second electrode plates 26, whereby metal ions such as calcium ions and magnesium ions as well as dissolved silica in the water to be treated are attracted by the second electrode plates 26 and reduced on the surfaces of second electrode plates 26, and precipitate as scale on the surfaces or near the surfaces of the second electrode plates 26. Therefore, cations in the water to be treated gradually decrease.

A constant-current DC power supply is used as the DC source 16. If a constant current is flown across the first electrode plates 24 and the second electrode plates 26, an anodically oxidized film is formed on the surfaces of the first electrode plates 24 functioning as the positive electrodes, and resistance increases on the surfaces of the first electrode plates 24. If the resistance increases, the voltage applied to the anodically oxidized film on the surfaces of the first electrode plates 24 increases in proportion to the resistance, whereby the anodically oxidized film on the surfaces of the first electrode plates 24 is dielectrically broken down and is peeled off the first electrode plates 24. Therefore, the resistance decreases on the surfaces of the first electrode plates 24.

If the treatment continues to soften the water through the electrolysis, scale precipitates on the surfaces or near the surfaces of the second electrode plates 26, and a sludge-like substance gradually accumulates on the bottom portion 18 of the electrolytic vessel 12.

Next, the operation time and the holding time are preset to the timer 58 for drainage. After the preset operation time has passed, the drain valve 56 is opened by the timer 58 for drainage, and the treated water (soft water) in the electrolytic vessel 12 is drained through the drain device 54 together with the scale deposited on the bottom portion 18.

The scale in the drained treated water (soft water) is filtered and removed by the filtering portion 60, and the treated water enters into the receiving tank 44. After the elapse of the preset holding time, the drain valve 56 is closed and the treated water starts filling again the electrolytic vessel 12. After having built up to some extent, the scale remaining in the filtering portion 60 is successively conveyed out and removed.

The conductivity meter 34 installed near the flow-out port of the electrolytic vessel 12 is measuring the electric conductivity of water to be treated at all times. If the electric conductivity of water to be treated becomes higher than a preset value, the alarm device 38 is operated, the alarm lamp 40 is turned on, and the alarm buzzer 42 sounds.

The float switch 36 at an upper part of the electrolytic vessel 12 monitors a resistance against the flow of the treated water derived from the scale building up in the filtering portion 60 of the receiving tank 44. If the resistance becomes greater than or equal to a predetermined value, the float switch 36 senses the rise of the water level, the alarm lamp 60 lights and the alarm buzzer 42 sounds.

### EXAMPLES

### Example 1

Raw water (water to be treated) containing alkali components was passed through the apparatus of the invention to be softened.

The electrode plate unit 14 in the apparatus of the invention consisted of 72 pieces of titanium plates measuring 300 mm wide, 600 mm high and 1 mm thick, facing each other in a number of 36 pieces on each side maintaining a pitch of 24 mm. The DC source 16 was a constant-current DC power supply and fed a constant current of 6 A to the electrode plate unit 14.

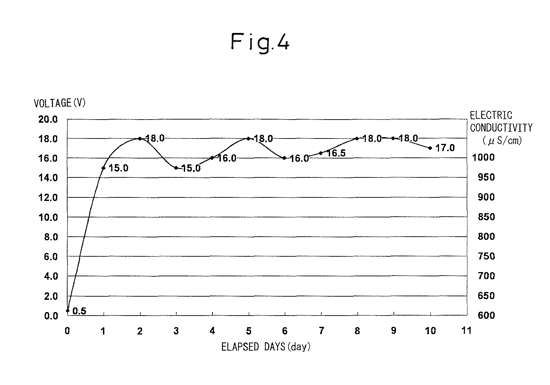

A constant current flows across the electrode plates by the constant-current DC power supply. As shown in Fig. 4, therefore, the voltage across the electrode plates is 0.5 V at first. As the anodically oxidized film forms on the surfaces of electrode plates on the positive pole side and its resistance increases, however, the voltage gradually increases and reaches about 18 V. If the voltage rises up to this value, the anodically oxidized film is dielectrically broken down and peels off resulting in the decreased resistance, and therefore, the voltage across the electrode plates decreases down to about 15 V. The resistance across the electrode plates does not decrease any further, and the anodically oxidized film forms again. Thus, the anodically oxidized film forms and breaks down and peels off repetitively.

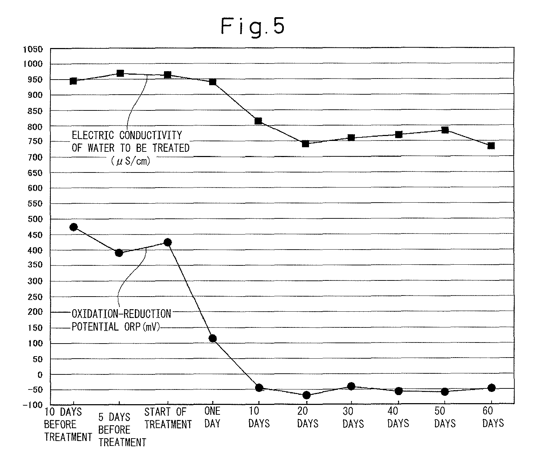

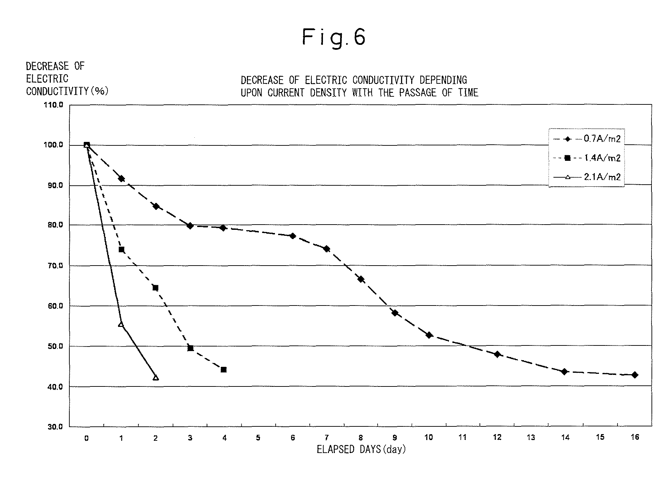

Referring to Fig. 5, the electric conductivity of water to be treated was 1000 µS/cm at first, but gradually decreased down and stabilized at 700 to 850 µS/cm. Similarly, the oxidation-reduction potential was 470 mV at first as shown in Fig. 6 but gradually decreased down and stabilized at -60 mV. A sludge-like substance precipitated on the bottom portion of the electrolytic vessel and was analyzed to comprising chiefly silica, calcium, magnesium and titanium oxide that was dielectrically broken down.

### Example 2

The density of electric current flowing into the electrode plate unit was varied at three levels, i.e., 0.7 A/m², 1.4 A/m² and 2.1 A/m², and the experiment was conducted in the same manner as in Example 1. The conductivities of water being treated were as shown in Fig. 6. From the experiment, it was found that the conductivity of water to be treated could be decreased in a shorter period of time if the current density was increased.

### Example 3

The operation was continued for one week under the conditions of Example 1, and thereafter, the operation was conducted by reversing the polarity. Scale adhered on the surfaces of the positive electrodes (which had been negative electrodes before the reverse) was peeled off in about 6 hours, and deposited in the bottom of the electrolytic vessel.

The operation was further continued in this state for one week, and the scale adhered on the surfaces of the negative electrodes, as was the case with the initial operation. However, it was expected that if the operation was continued, then the scale remains adhered on the negative electrodes and it would become difficult to recover the scale and the scale fixing efficiency would decrease due to the electrolytic resistance. Therefore, the operation was carried out by alternately changing the polarity every week. As a result, the scale adhered on the negative electrodes was efficiently peeled off and deposited on the bottom of the electrolytic vessel 12 together with the anodically oxidized film that was peeled off by the dielectric breakdown. By repetitively inverting the positive and negative polarities as described above, the scale adhered on the negative electrodes could be efficiently recovered. Further, the negative electrodes could be maintained in a state where no scale adhered and the electrolytic efficiency did not decrease.

### Example 4

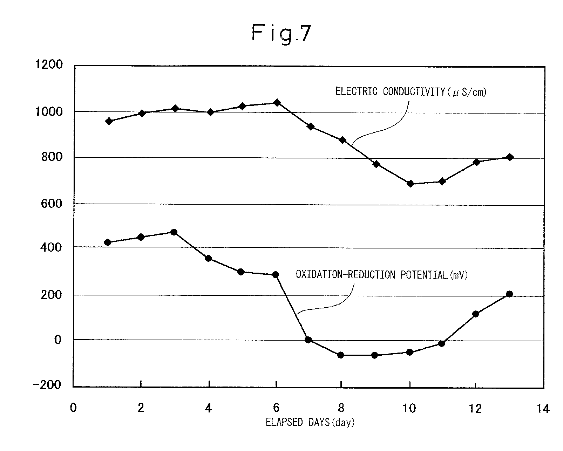

By using a constant-current power supply, the electric current fed from the DC source 16 to the electrode plate unit 14 was increased or decreased depending upon the electric conductivity measured by the conductivity meter 34. In other words, the electric current was nearly doubled when the electric conductivity exceeded 1000 µS/cm and was returned back to the initial value when the electric conductivity became smaller than 700 µS/cm. As a result as shown in Fig. 7, the electric conductivity changed from 1040 µS/cm to 690 µS/cm when the current was nearly doubled, and the electric conductivity increased from 690 µS/cm to 810 µS/cm when the current was returned back to the initial value. It will be understood from the above results that a desired capability can be controlled by increasing or decreasing the electric current fed to the electrode plate unit 14.

In other words, the scale in water to be treated was efficiently removed. Further, when the electric conductivity was lying in an allowable range, the electric current does not have to be excessively fed contributing to saving electric fees and preventing the electrode plates from being excessively corroded and worn out.

### Example 5

By using the oxidation-reduction potential meter for measuring the oxidation-reduction potential of water to be treated and the constant-current power supply, the amount of electric current fed to the electrode plate unit 14 was increased depending upon the oxidation-reduction potential measured by the oxidation-reduction potential meter like in Example 4. In other words, the electric current was increased by 100% when the oxidation-reduction potential exceeded 200 mV. As a result as shown in Fig. 7, the oxidation-reduction potential decreased from 280 mV to -60 mV when the current was increased by 100%. It will be understood from the above results that a desired capability can be controlled by increasing or decreasing the electric current fed to the electrode plate unit 14.

In other words, the scale in water to be treated was efficiently removed. Further, when the oxidation-reduction potential was lying in an allowable range, the electric current does not have to be excessively fed contributing to saving electric fees and preventing the electrode plates from being excessively corroded.

Though the above Examples have used the constant-current DC power supply as the DC source, it is also allowable to use a constant-voltage DC power supply as the DC source. In this case, the electric current flowing across the electrode plates is monitored by an ammeter that is not shown, and the power source voltage is increased when the current becomes smaller than a predetermined value. Upon increasing the power source voltage, the anodically oxidized film on the surfaces of the electrode plates is dielectrically broken down and is peeled off resulting in the decreased resistance across the electrode plates. If the resistance across the electrode plates decreases, a predetermined current starts flowing. At this moment, the voltage of the power source is returned back to the initial voltage. Upon returning the voltage of the power source to the initial value, excessive current does not flow across the electrodes, and the electrode plates are prevented from being quickly corroded.

### Industrial Applicability.

The present invention can be applied to softening drinking water, water in a vapor-generating apparatus such as boiler or the like, water for cooling a mold used in injection-molding machine or the like, water used in electric heating systems such as electric hot water feeder, humidifier and induction heating furnace, water (raw water) fed to an apparatus for producing pure water, water circulating in a cooling tower, water circulating in a chiller, water circulating in a water-cooling/heating unit, water replenished to a heat pump-type hot water feeder, water replenished to a gas/petroleum hot water feeder, water of a 24-hour-heated bath, water of a pool and water of an artificial pond.

## Claims

1. A method of softening water by flowing water to be treated between opposing electrode plates, and applying a DC voltage across the electrode plates so that metal ions in the water to be treated are electrolytically precipitated on the electrode plates on the negative pole side to thereby soften the water to be treated, wherein titanium plates are used as the electrode plates on the positive pole side, and electric current is flown across the electrode plates in an amount sufficient for applying a voltage that is capable of dielectrically breaking down an anodically oxidized film formed on the surfaces of the electrode plates on the positive pole side.

2. The method of softening water according to claim 1, wherein the polarity of voltage applied across the electrode plates is switched at predetermined intervals.

3. The method of softening water according to claim 1 or 2, wherein the electric current flowing across the electrode plates is a constant electric current.

4. The method of softening water according to claim 3, wherein the electric current flowing across the electrode plates is 0.1 to 20 A per a unit area (1 m²) of the electrode plates on the positive pole side.

5. The method of softening water according to claim 1 or 2, wherein a voltage applied across the electrode plates is set to a constant value, and when the electric current flowing across the electrode plates becomes smaller than a predetermined value, the voltage applied across the electrode plates is increased, and when the electric current flowing across the electrode plates becomes larger than or equal to the predetermined value, the voltage applied across the electrode plates is returned back to the constant value as initially set.

6. The method of softening water according to claim 1 or 2, wherein when the electric conductivity of water to be treated is higher than a predetermined value A, the electric current flowing across the electrode plates is increased, and when the electric conductivity of water to be treated is lower than a predetermined value B, the electric current flowing across the electrode plates is decreased, the predetermined value A and the predetermined value B maintaining a relationship A ≥ B.

7. The method of softening water according to claim 6, wherein the predetermined value A of electric conductivity of the water to be treated is 100 to 3000 µS/cm and the predetermined value B thereof is 100 to 3000 µS/cm.

8. The method of softening water according to claim 1 or 2, wherein when the oxidation-reduction potential of water to be treated is higher than a predetermined value C, the electric current flowing across the electrode plates is increased, and when the oxidation-reduction potential of water to be treated is lower than a predetermined value D, the electric current flowing across the electrode plates is decreased, the predetermined value C and the predetermined value D maintaining a relationship C ≥ D.

9. The method of softening water according to claim 8, wherein the predetermined value C of oxidation-reduction potential of the water to be treated is +100 to -100 mV and the predetermined value D thereof is +100 to -100 mV.

10. An apparatus for softening water comprising an electrolytic vessel for receiving and draining water to be treated, one or more first electrode plates installed in the electrolytic vessel, one or more second electrode plates installed in the electrolytic vessel maintaining a predetermined gap relative to the first electrode plates, and a DC source for applying a DC voltage across the first electrode plates and the second electrode plates, wherein the first electrode plates and the second electrode plates both comprise titanium plates, and the DC source is a regulated DC power supply capable of supplying a voltage for peeling and removing, by dielectric breakdown, an anodically oxidized film formed on the surfaces of the first electrode plates or of the second electrode plates.

11. The apparatus for softening water according to claim 10, further comprising a polarity switching device for switching, at predetermined intervals, the polarity of voltage applied by the DC source to the first electrode plates and to the second electrode plates.

12. The apparatus for softening water according to claim 10 or 11, wherein the DC source is a constant-current power supply capable of flowing a constant current of 0.1 to 20 A per a unit area (1 m²) of the electrode plates functioning as the positive electrodes, across the first electrode plates and the second electrode plates.

13. The apparatus for softening water according to claim 10 or 11, wherein the DC source is a constant-voltage DC power supply, and the apparatus further comprises an ammeter for measuring electric current flowing across the electrode plates, and a voltage control device which, when the electric current measured by the ammeter becomes smaller than a predetermined value, increases the output voltage of the DC source, and when the electric current measured by the ammeter becomes larger than the predetermined value, decreases the output voltage of the DC source.

14. The apparatus for softening water according to claim 10 or 11, further comprising a conductivity meter for measuring the electric conductivity of water to be treated, and a current controller which, when the electric conductivity measured by the conductivity meter is higher than a predetermined value A, increases the output voltage of the DC source to increase the electric current flowing across the electrode plates, and when the electric conductivity measured by the conductivity meter is lower than a predetermined value B, decreases the output voltage of the DC source to decrease the electric current flowing across the electrode plates, the predetermined value A and the predetermined value B maintaining a relationship A ≥ B.

15. The apparatus for softening water according to claim 14, wherein the predetermined value A of electric conductivity of the water to be treated is 100 to 3000 µS/cm and the predetermined value B thereof is 100 to 3000 µS/cm.

16. The apparatus for softening water according to claim 10 or 11, further comprising an oxidation-reduction potential meter for measuring the oxidation-reduction potential of water to be treated, and a current controller which, when the oxidation-reduction potential measured by the oxidation-reduction potential meter is higher than a predetermined value C, increases the output voltage of the DC source to increase electric current flowing across the electrode plates, and when the oxidation-reduction potential measured by the oxidation-reduction potential meter is lower than a predetermined value D, decreases the output voltage of the DC source to decrease the electric current flowing across the electrode plates, the predetermined value C and the predetermined value D maintaining a relationship C ≥ D.

17. The apparatus for softening water according to claim 16, wherein the predetermined value C of oxidation-reduction potential of the water to be treated is +100 to -100 mV and the predetermined value D thereof is +100 to -100 mV.
